# EUROPEAN PATENT SPECIFICATION

(11) **EP 3 512 483 B1**
(45) Date of publication and mention of the grant of the patent: **20.05.2020**
(21) Application number: 18703411.1
(22) Date of filing: 17.01.2018
(51) Int. Cl.: A61H 1/02, A61H 3/00, F16H 1/20, F16H 7/06

(54) **LEGGED MOBILITY EXOSKELETON DEVICE WITH ENHANCED ACTUATOR MECHANISM**
BEBEINTE MOBILE EXOSKELETTVORRICHTUNG MIT VERBESSERTEM BETÄTIGUNGSMECHANISMUS
DISPOSITIF D'EXOSQUELETTE DE MOBILITÉ À JAMBES, À MÉCANISME ACTIONNEUR AMÉLIORÉ

(30) Priority: 08.02.2017 US 201762456294 P
(43) Date of publication of application: 24.07.2019
(73) Proprietor: Parker-Hannifin Corporation, Cleveland, Ohio 44124-4141 (US)
(72) Inventor: FARRIS, Ryan, Macedonia, Ohio 44056 (US); ETHERIDGE, Steven, Macedonia, Ohio 44056 (US); MORRISON, Scott, Macedonia, Ohio 44056 (US)
(74) Representative: Davies, Gregory Mark
(86) International application number: PCT/US2018/013990
(87) International publication number: WO 2018/147980

(56) References cited:
- WO-A1-2014/151584
- US-A1- 2016 016 307
- US-A1- 2016 106 615
- US-A1- 2016 193 102

## Description

### Field of Invention

The present invention relates to movement assist devices, such as a legged mobility device or "exoskeleton" device, and more particularly to drive mechanisms for driving the joint components of such devices.

### Background of the Invention

There are currently on the order of several hundred thousand spinal cord injured (SCI) individuals in the United States, with roughly 12,000 new injuries sustained each year at an average age of injury of 40.2 years. Of these, approximately 44% (approximately 5300 cases per year) result in paraplegia. One of the most significant impairments resulting from paraplegia is the loss of mobility, particularly given the relatively young age at which such injuries occur. Surveys of users with paraplegia indicate that mobility concerns are among the most prevalent, and that chief among mobility desires is the ability to walk and stand. In addition to impaired mobility, the inability to stand and walk entails severe physiological effects, including muscular atrophy, loss of bone mineral content, frequent skin breakdown problems, increased incidence of urinary tract infection, muscle spasticity, impaired lymphatic and vascular circulation, impaired digestive operation, and reduced respiratory and cardiovascular capacities.

In an effort to restore some degree of legged mobility to individuals with paraplegia, several lower limb orthoses have been developed. The simplest form of such devices is passive orthotics with long-leg braces that incorporate a pair of ankle-foot orthoses (AFOs) to provide support at the ankles, which are coupled with leg braces that lock the knee joints in full extension. The hips are typically stabilized by the tension in the ligaments and musculature on the anterior aspect of the pelvis. Since almost all energy for movement is provided by the upper body, these passive orthoses require considerable upper body strength and a high level of physical exertion, and provide very slow walking speeds.

The hip guidance orthosis (HGO), which is a variation on long-leg braces, incorporates hip joints that rigidly resist hip adduction and abduction, and rigid shoe plates that provide increased center of gravity elevation at toe-off, thus enabling a greater degree of forward progression per stride. Another variation on the long-leg orthosis, the reciprocating gait orthosis (RGO), incorporates a kinematic constraint that links hip flexion of one leg with hip extension of the other, typically by means of a push-pull cable assembly. As with other passive orthoses, the user leans forward against a stability aid (e.g., bracing crutches or a walker) while un-weighting the swing leg and utilizing gravity to provide hip extension of the stance leg. Since motion of the hip joints is reciprocally coupled through the reciprocating mechanism, the gravity-induced hip extension also provides contralateral hip flexion (of the swing leg), such that the stride length of gait is increased. One variation on the RGO incorporates a hydraulic-circuit-based variable coupling between the left and right hip joints. Experiments with this variation indicate improved hip kinematics with the modulated hydraulic coupling.

To decrease the high level of exertion associated with passive orthoses, the use of powered orthoses has been under development, which incorporate actuators and drive motors associated with a power supply to assist with locomotion. These powered orthoses have been shown to increase gait speed and decrease compensatory motions, relative to walking without powered assistance. The use of powered orthoses presents an opportunity for electronic control of the orthoses, for enhanced user mobility.

An example of the current state of the art of exoskeleton devices is shown in Applicant's co-pending International Application Serial No. PCT/US2015/23624, entitled "Wearable Robotic Device," filed 31 March 2015. Such device is representative of an effective and generally user friendly exoskeleton device. There is a general concern with exoskeleton devices that they be compact and light weight. Device users typically have significant physical impairments, and reducing the size and weight of exoskeleton devices makes them easier to don and otherwise manipulate. With increased ease, users can experience more freedom of mobility, and can reduce the need for outside caregivers and assistance.

WO2014/151584 describes an orthotic device drive system comprising an actuator. The actuator includes a first spool and a second spool rotatably mounted to the first portion. An output pulley is mounted to the second portion. A belt has a first end wrapped around the first spool, a second end wrapped around the second spool, and a mid-portion wrapped around the output pulley. The actuator is configured to rotate the first and second spools. The rotation of the first spool pulls the belt a given length, and the rotation of the second spool feeds the belt less than the given length, so as to pull the output pulley towards the first portion to pull the second portion towards the first portion.

US2016/016307, US2016/106615, US2016/193102 describe further examples of a connecting module, driving module and motion assistance apparatus.

The drive mechanism for the joint components is one aspect of exoskeleton devices that is a continuing subject of concern for rendering exoskeleton devices more compact and light weight. Reduced size and weight must be balanced with performance so as to provide a device that is more user friendly to don and manipulate, while still providing adequate torque and driving forces for operation of the exoskeleton device.

### Summary of the Invention

The present invention is directed to movement assist devices such as powered limb or gait orthoses or wearable robotic legged mobility devices or "exoskeletons," and more particularly to drive mechanisms for driving the joint components of such devices. An aspect of the invention is an enhanced actuator assembly that acts as a driving mechanism for joint components in a powered movement assist device, such as for example a legged mobility device or exoskeleton, as defined in the appended claims. The actuator assembly may be configured as a high torque-to-weight ratio actuator having a three-stage transmission with a cable reel, roller chain, or belt driven final transmission stage.

When described in terms of mechanical power needed at the physiological hip and knee joints of a human, walking is a low speed, high torque activity relative to the torque-speed performance of most electric motors. Therefore, an actuator designed to assist human walking should ideally maximize torque output for a given actuator weight. The actuator of the present invention provides for such a high torque, low speed output suitable for walking.

The joint actuator assembly includes a three-stage speed reduction transmission to provide adequate output torque. The first stage may use a cable chain to transmit power from a small sprocket attached to the shaft of a flat-profile brushless electric motor to a large sprocket (this is the first speed reduction phase). The large sprocket may be attached to the same shaft as a small, central helical gear. This small central helical gear meshes with two large outer helical gears, each on opposite sides of the small central helical gear (this is the second speed reduction phase). These large helical gears may be attached to two separate first and second cable reels, with each cable reel being configured as a simple mandrel designed to spool cable onto the mandrel. These cable reels each may have ultra-flexible miniature steel cable wrapped around them and are terminated in a center of the hollow mandrel.

As the cable reels rotate in one direction, a first cable reel draws in cable while the other second cable reel pays out cable. As the cable reels rotate in the opposite direction, the reverse occurs. The ends of the two cables are wrapped around a final large output reel, one wrapping clockwise and the other wrapping counterclockwise (this is the third and final speed reduction stage). The cables each enter separate tensioner ratchet reels within the large output reel, which enables tightening of the cables to remove backlash in the system. In another embodiment, the final stage uses a roller chain instead of a cable drive. Also, the cable chain and roller chain instead may each be replaced with belts or a high tensile strength cord or rope type element. Suitable materials may include high modulus polymer materials, such as for example synthetic ultra-high molecular weight polyethylene braids. The helical gears also may be spur gears.

Optionally, the first stage of speed reduction comprises: a first sprocket that is mechanically connected to the output shaft of the motor, such that the motor operates to drive rotation of the first sprocket; a second sprocket that is larger than the first sprocket; and a cable element that transmits power from the first sprocket to the second sprocket to provide the speed reduction of the motor output.

Optionally, the cable element is a cable chain.

Optionally, the cable element is a belt.

Optionally, the output of the first stage of speed reduction comprises a first stage output shaft that interconnects the first stage of speed reduction to the second stage of speed reduction.

Optionally, the second stage of speed reduction comprises: a central gear that is mechanically connected to the output of the first stage of speed reduction; and first and second outer gears that mesh with the central gear, wherein the first and second outer gears are larger than the central gear and are located on opposite sides of the central gear; wherein the central gear transmits power to the first and second outer gears to provide the speed reduction of the output of the first stage of speed reduction.

Optionally, the central gear and the first and second outer gears are helical gears.

Optionally, the central gear and the first and second outer gears are spur gears.

Optionally, the actuator assembly is back-driveable such that when the cable reels rotate in a second direction opposite from the first direction, the second cable reel draws in the second cable and the first cable reel pays out the first cable.

Optionally, one of the first or second cables wraps around the output reel in a clockwise direction and the other of the first or second cables wraps around the output reel in a counterclockwise direction.

Optionally, the cable reel assembly further comprises one or more ratchet assemblies for tensioning the first cable and/or the second cable.

Optionally, the cable element of the cable assembly is a roller chain.

Optionally, the cable element of the cable assembly is one of a belt, cord or rope made of a polymer material.

Optionally, the motor is a brushless electric motor having a flat profile.

Optionally, the actuator assembly is back-driveable.

Optionally, the motor, and the first, second, and third stages of speed reduction are mounted on a common frame.

Optionally, the motor, and the first, second, and third stages of speed reduction are incorporated into a common housing to form a self-contained cassette.

The joint actuator assembly configured as described has a thin profile and is extremely lightweight relative to its output torque capability. Each stage of the transmission is highly efficient and thus very little power is lost through the transmission. The transmission is also back-driveable, meaning that a torque applied at the output will cause the transmission, and ultimately the motor, to spin. This feature of being back-driveable enables cooperative motion of user muscles and device operation when the device is worn by a user who is able to contribute some power via their own muscles.

Another aspect of the invention is a mobility device including a joint component the joint actuator assembly of any of the embodiments, wherein the actuator assembly drives the joint component.

Another aspect of the invention is a legged mobility exoskeleton device including a hip component; at least one lower leg assembly; and at least one thigh assembly connected to the hip assembly at a hip joint and connected to the at least one lower leg assembly at a knee joint. The at least one thigh assembly includes a first actuator assembly according to any of the embodiments that drives the hip joint, and a second actuator assembly according to any of the embodiments that drives the knee joint.

In an exemplary embodiment of the legged mobility exoskeleton device, the at least one lower leg assembly comprises a left lower leg assembly and a right lower leg assembly; and the at least one thigh assembly comprises a left thigh assembly connected to the hip assembly at a left hip joint and to the left lower leg assembly at a left knee joint, and a right thigh assembly connected to the hip assembly at a right hip joint and to the right lower leg assembly at a right knee joint. The left thigh assembly includes the first actuator assembly according to any of the embodiments that drives the left hip joint, and the second actuator assembly according to any of the embodiments that drives the left knee joint. The right thigh assembly includes a third actuator assembly according to any of the embodiments that drives the right hip joint, and a fourth actuator assembly according to any of the embodiments that drives the right knee joint.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the claims appended hereto. Features that are described and/or illustrated with respect to one embodiment may be used in the same way or in a similar way in one or more other embodiments and/or in combination with or instead of the features of the other embodiments.

### Brief Description of the Drawings

Fig. 1 is a drawing depicting an exemplary exoskeleton device as being worn by a user.
Fig. 2 is a drawing depicting a perspective view of an exemplary exoskeleton device in a standing position.
Fig. 3 is a drawing depicting a perspective view of the exemplary exoskeleton device in a seated position.
Fig. 4 is a drawing depicting a front view of the exemplary exoskeleton device in a standing position.
Fig. 5 is a drawing depicting a side view of the exemplary exoskeleton device in a standing position.
Fig. 6 is a drawing depicting a back view of the exemplary exoskeleton device in a standing position.
Fig. 7 is a drawing depicting a perspective view of an exemplary thigh assembly having two exemplary actuator cassettes installed therein.
Fig. 8 is a drawing depicting a front exploded view of the exemplary thigh assembly having two exemplary actuator cassettes installed therein.
Fig. 9 is a drawing depicting a perspective exploded view of the exemplary thigh assembly having two exemplary actuator cassettes installed therein.
Fig. 10 is a drawing depicting a top view of an exemplary actuator cassette.
Fig. 11 is a drawing depicting a bottom view of an exemplary actuator cassette.
Fig. 12 is a drawing depicting an isometric view of an exemplary joint actuator assembly in accordance with embodiments of the present invention.
Fig. 13 is a drawing depicting a top view of the exemplary actuator assembly of Fig. 12, including a depiction of helical gears for an exemplary second stage of speed reduction.
Fig. 14 is a drawing depicting a top transparent view of the exemplary actuator assembly of Figs. 12-13, i.e., transparent to show components below the top portion of the actuator assembly.
Fig. 15 is a drawing depicting a bottom view of the exemplary actuator assembly of Figs. 12-14, illustrating an exemplary first stage of speed reduction.
Fig. 16 is a drawing depicting a top view of the exemplary actuator assembly similarly as in Fig. 13, showing dual winding paths for an exemplary third stage of speed reduction.
Fig. 17 is a drawing depicting an exemplary ratchet assembly in accordance with embodiments of the present invention.
Fig. 18 is a drawing depicting a top view of another exemplary join actuator assembly, showing an alternative configuration of an exemplary third stage of speed reduction.
Fig. 19 is a drawing depicting a top transparent view of the exemplary actuator assembly of Fig. 18, i.e., transparent to show components below the top portion of the actuator assembly.
Fig. 20 is a drawing depicting a top view of the exemplary actuator assembly of Fig. 18, showing an additional roller chain for use in the third stage of speed reduction.
Fig. 21 is a drawing depicting a first isometric view of the exemplary joint actuator assembly in combination with a driven component, in accordance with embodiments of the present invention.
Fig. 22 is a drawing depicting a second isometric view of the combined exemplary joint actuator assembly and driven component of Fig. 21.

### Detailed Description

Embodiments of the present invention will now be described with reference to the drawings, wherein like reference numerals are used to refer to like elements throughout. It will be understood that the figures are not necessarily to scale.

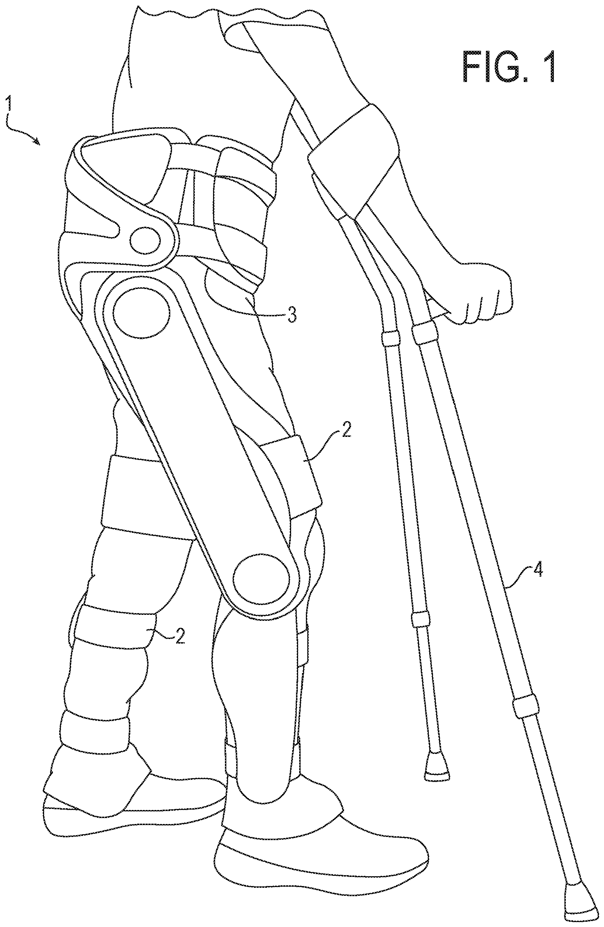

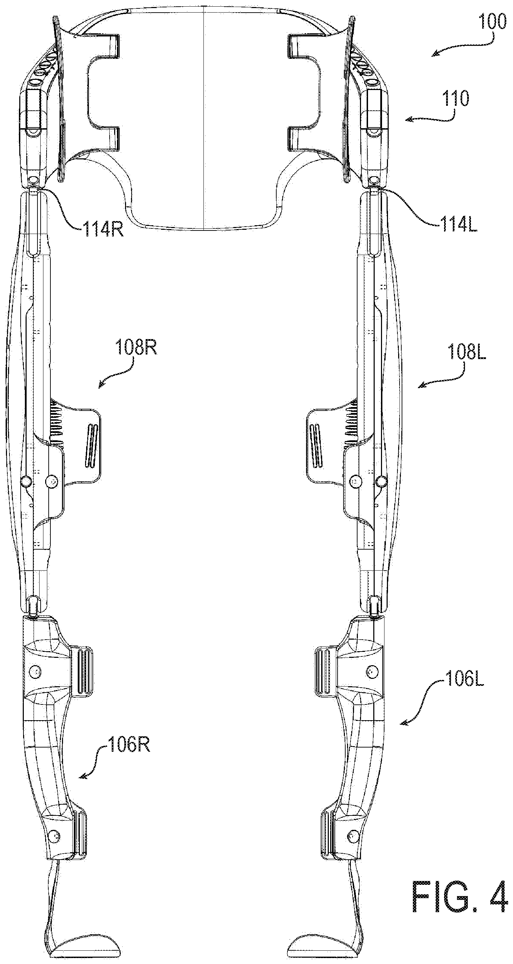

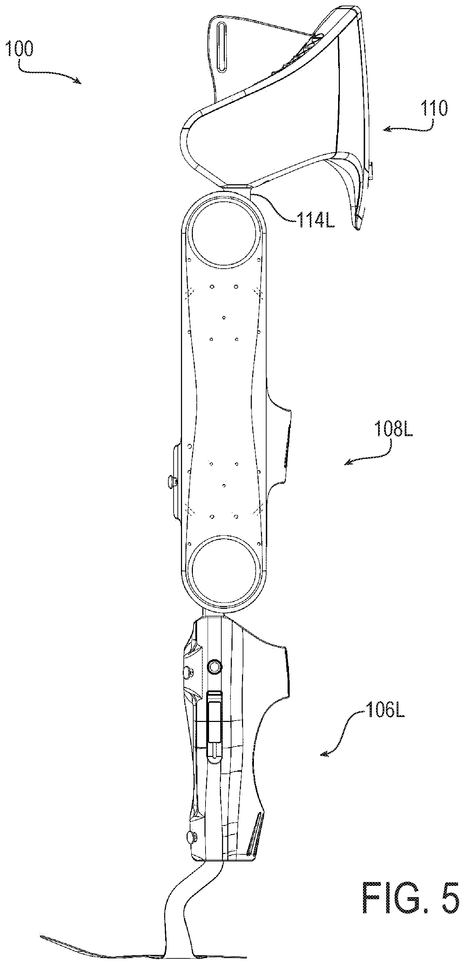

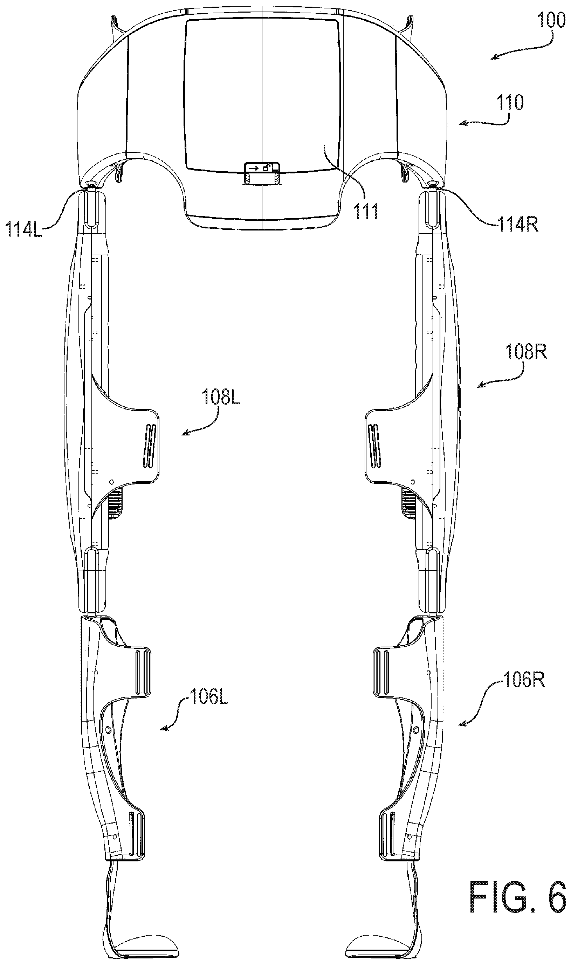

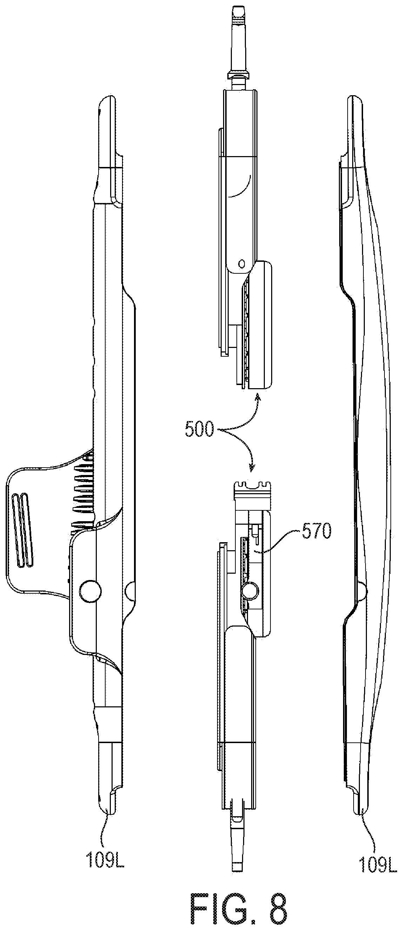

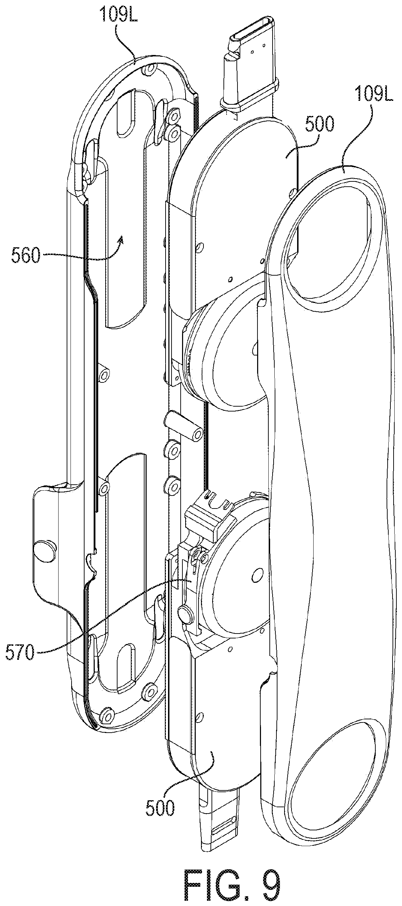

For context, Figs. 1-11 depict various views of an exemplary exoskeleton device that may be used in connection with the adjustment mechanisms of the present invention. A somewhat generalized description of such exoskeleton device is provided here for illustration purposes. A more detailed description of such device may be found in Applicant's International Patent Appl. No. PCT/US2015/023624 filed on March 3, 2015. It will be appreciated, however, that the described exoskeleton device presents an example usage, and that the features of the joint actuator assembly of the present invention are not limited to any particular configuration of an exoskeleton device. Variations may be made to the exoskeleton device, while the features of the present invention remain applicable. In addition, the principles of this invention may be applied generally to any suitable mobility device. Such mobility devices include, for example, orthotic devices which aid in mobility for persons without use or limited use of a certain body portion, and prosthetic devices, which essentially provide an electro-mechanical replacement of a body part that is not present such as may be used by an amputee or a person congenitally missing a body portion. The mobility devices may be configured as or include lower and/or upper joint components either individually or in combination as a unitary component.

As show in Fig. 1, an exoskeleton device 1, which also may be referred to in the art as a "wearable robotic device", can be worn by a user. To attach the device to the user, the device 1 can include attachment devices 2 for attachment of the device to the user via belts, loops, straps, or the like. Furthermore, for comfort of the user, the device 1 can include padding 3 disposed along any surface likely to come into contact with the user. The device 1 can be used with a stability aid 4, such as crutches, a walker, or the like.

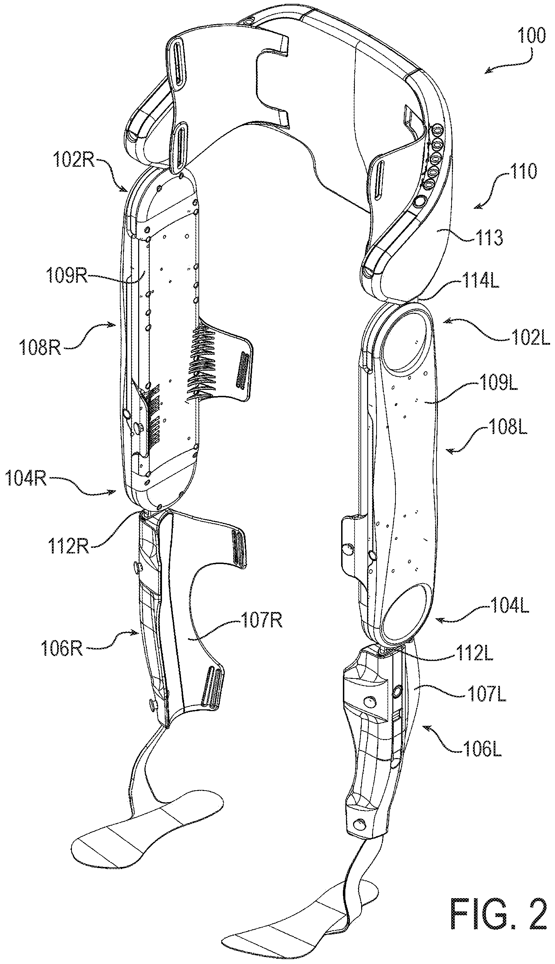

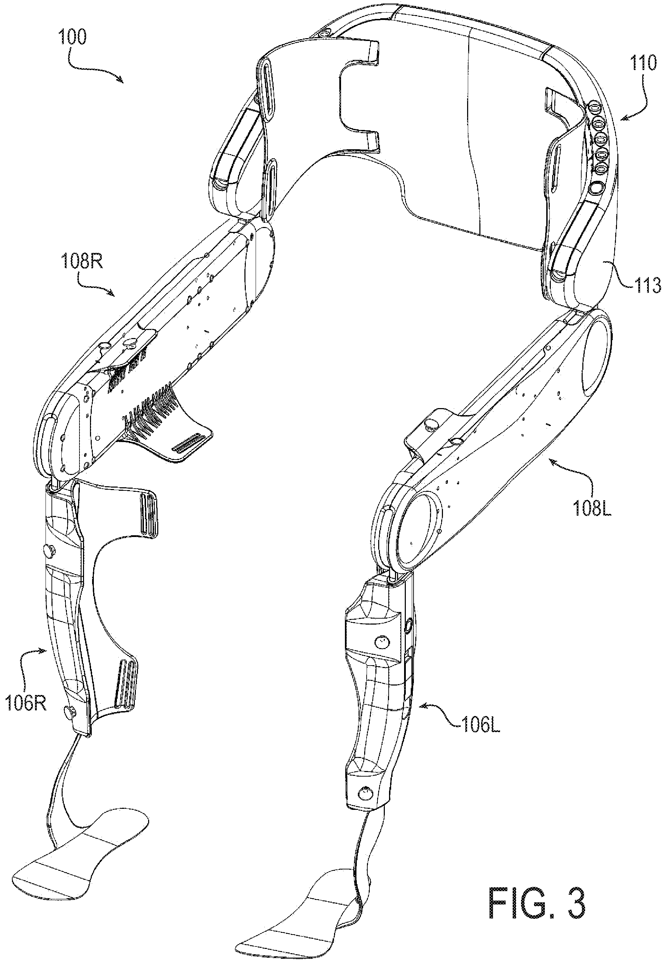

An exemplary legged mobility exoskeleton device is illustrated as a powered lower limb orthosis 100 in Figs. 2-6. Specifically, the orthosis 100 shown in Figs. 2-6 may incorporate four drive components configured as electro-motive devices (for example, electric motors), which impose sagittal plane torques at each knee and hip joint components including (right and left) hip joint components 102R, 102L and knee joint components 104R, 104L. Fig. 2 shows the orthosis 100 in a standing position while Fig. 3 shows the orthosis 100 in a seated position.

As seen in the figures, the orthosis contains five assemblies or modules, although one or more of these modules may be omitted and further modules may be added (for example, arm modules), which are: two lower (right and left) leg assemblies (modules) 106R and 106L, two (left and right) thigh assemblies 108R and 108L, and one hip assembly 110. Each thigh assembly 108R and 108L includes a respective thigh assembly housing 109R and 109L, and link, connector, or coupler 112R and 112L extending from each of the knee joints 104R and 104L and configured for moving in accordance with the operation of the knee joints 104R and 104L to provide sagittal plane torque at the knee joints 104R and 104L.

The connectors 112R and 112L further may be configured for releasably mechanically coupling each of thigh assembly 108R and 108L to respective ones of the lower leg assemblies 106R and 106L. Furthermore, each thigh assembly 108R and 108L also includes a link, connector, or coupler 114R and 114L, respectively, extending from each of the hip joint components 102R and 102L and moving in accordance with the operation of the hip joint components 102R and 102L to provide sagittal plane torque at the knee joint components 104R and 104L. The connectors 114R and 114L further may be configured for releasably mechanically coupling each of thigh assemblies 108R and 108L to the hip assembly 110.

In some embodiments, the various components of device 100 can be dimensioned for the user. However, in other embodiments the components can be configured to accommodate a variety of users. For example, in some embodiments one or more extension elements can be disposed between the lower leg assemblies 106R and 106L and the thigh assemblies 108R and 108L to accommodate users with longer limbs. In other configurations, the lengths of the two lower leg assemblies 106R and 106L, two thigh assemblies 108R and 108L, and one hip assembly 110 can be adjustable. That is, thigh assembly housings 109R, 109L, the lower leg assembly housings 107R and 107L for the lower leg assemblies 106R, 106L, respectively, and the hip assembly housing 113 for the hip assembly 110 can be configured to allow the user or medical professional to adjust the length of these components in the field. For example, these components can include slidable or movable sections that can be held in one or more positions using screws, clips, or any other types of fasteners. In view of the foregoing, the two lower leg assemblies 106R and 106L, two thigh assemblies 108R and 108L, and one hip assembly 110 can form a modular system allowing for one or more of the components of the orthosis 100 to be selectively replaced and for allowing an orthosis to be created for a user without requiring customized components. Such modularity can also greatly facilitate the procedure for donning and doffing the device.

In orthosis 100, each thigh assembly housing 109R, 109L may include substantially all the drive components for operating and driving corresponding ones of the knee joint components 104R, 104L and the hip joint components 102R, 102L. In particular, each of thigh assembly housings 109R, 109L may include drive components configured as two motive devices (e.g., electric motors) which are used to drive the hip and knee joint component articulations. However, the various embodiments are not limited in this regard, and some drive components can be located in the hip assembly 110 and/or the lower leg assemblies 106R, 106L.

A battery 111 for providing power to the orthosis can be located within hip assembly housing 113 and connectors 114R and 114L can also provide means for connecting the battery 111 to any drive components within either of thigh assemblies 108R and 108L. For example, the connectors 114R and 114L can include wires, contacts, or any other types of electrical elements for electrically connecting battery 111 to electrically powered components in thigh assemblies 108R and 108L. In the various embodiments, the placement of battery 111 is not limited to being within hip assembly housing 113. Rather, the battery can be one or more batteries located within any of the assemblies of orthosis 100.

The referenced drive components may incorporate suitable sensors and related internal electronic controller or control devices for use in control of the exoskeleton device. Such internal control devices may perform using the sensory information the detection of postural cues, by which the internal control device will automatically cause the exoskeleton device to enter generalized modes of operation, such as sitting, standing, walking, variable assist operation, and transitions between these generalized modes or states (e.g., Sit to Stand, Stand to Walk, Walk to Stand, Stand to Sit, etc.) and step transition (e.g., Right Step, Left Step).

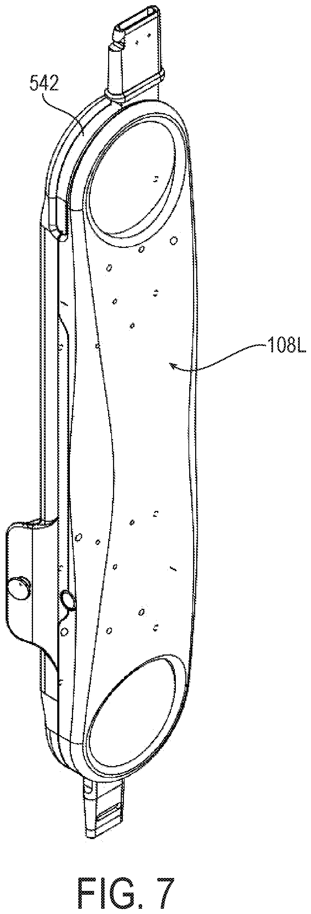

In the various embodiments, to maintain a low weight for orthosis and a reduced profile for the various components, the drive components may include a substantially planar drive system that is used to drive the hip and knee articulations of the joint components. For example, each motor can respectively drive an associated joint component through operation of an actuator containing a multi-stage speed-reduction transmission using an arrangement of reduction stages oriented substantially parallel to the plane of sagittal motion. Referring to Figs. 7-12, consolidating the moveable parts into self-contained units, referred to herein as "cassettes," allow for ease of maintenance and replacement because cassettes are swappable, making them easier to service or requiring less of a variety in spare components. As used herein, "self-contained" means that the cassette includes everything necessary to operate in a fully functional manner if supplied with power, including receiving or generating as warranted any related control signals to the joint components. Thus, for example, if power is supplied to electrical contacts of the cassette, the cassette would actuate.

In the illustrated embodiments of the drive components, an exemplary actuator assembly includes a motor that is integrated onto a common baseplate along with the speed reduction stages of the transmission. The actuator assembly provides smooth and efficient transfer of motion from the motor to the joint angle. Integrating the motor into the cassette allows for a thinner overall package configuration and provides consistent alignment among parts. Moreover, integrating the motor into a cassette also creates a larger surface area to transfer and emit heat generated by the motor. In the instance of a mobility assistance device, these cassettes may pertain to a specific joint or set of joints on the device. Each may have a unique actuation unit or share an actuation unit. The cassettes may also house the electronic control device, and further may contain sensor elements such as the accelerometers, gyroscopes, inertial measurement, and other sensors to detect and observe the upper leg orientation or angle and angular velocity. The self-contained cassette units can be preassembled to aid in manufacturing the broader device. This allows for quick servicing of the device since individual cassettes can be swapped out and serviced.

Therefore, referring to Figs. 7-11, a removable, self-contained, ovular actuator cassette 500 may be receivable in a receptacle of a wearable robotic device, such as for example in a left thigh component 108L. It will be appreciated that a comparable cassette design may be incorporated into any of the joint components of the device. The cassette 500 may include a first circular portion 520 housing a motive device (e.g., an electric motor) 502. A second circular portion 522 may be longitudinally offset and longitudinally overlapping the first circular portion and may house a transmission system, described in detail below, driven by the motive device 502. A third circular portion 524 may be longitudinally offset from the first and second circular portions and longitudinally overlapping the second circular portion and may house a second portion of the transmission. These three overlapping circular portions make an ovular shape, which may include the referenced sensors and electronic control devices. Therefore, an ovular housing 530 may support the motive device 502 and the multi-stage transmission system described below. Long sides of the ovular housing are straight and parallel with each other and tangentially terminate as curved end surfaces of the ovular housing.

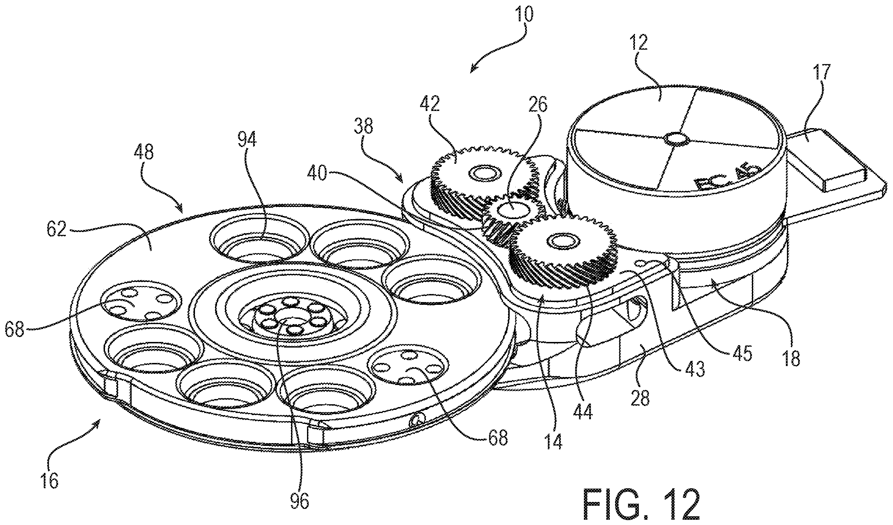

Figs. 12-14 depict various views of an exemplary actuator assembly 10 in accordance with embodiments of the present invention. The actuator assembly 10 may be incorporated into a cassette configuration as described above. One actuator assembly 10 in a cassette may be employed for a knee joint, and another actuator assembly in a cassette may be employed for a hip joint. Such a configuration may be employed on both left and rights sides for a legged mobility exoskeleton device.

In general, in exemplary embodiments a joint actuator assembly may include a motor that drives a joint connector for driving a joint of a mobility device; a first stage of speed reduction connected to an output shaft of the motor for providing a speed reduction of the motor output; a second stage of speed reduction linked to an output of the first stage of speed reduction for providing a speed reduction relative to the output of the first stage; and a third stage of speed reduction linked to an output of the second stage of speed reduction for providing a speed reduction relative to the output of the second stage. The first, second, and third stages operate as a three-stage transmission to provide the output that drives the joint connector.

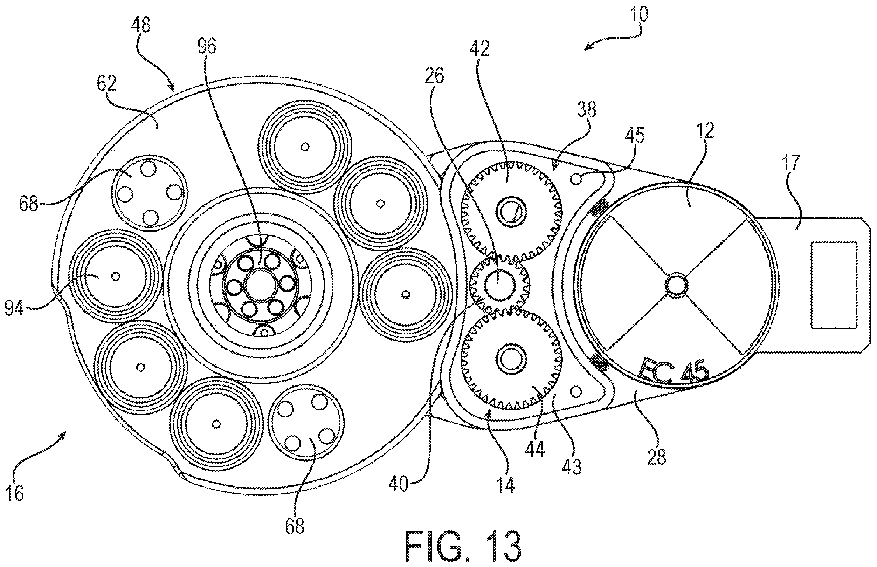

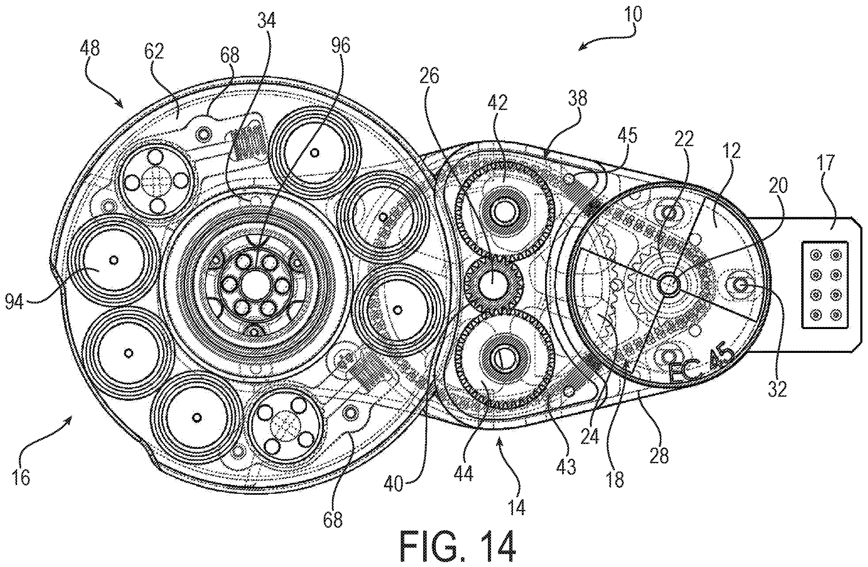

Referring to the particular figures, Fig. 12 is a drawing depicting an isometric view of the exemplary joint actuator assembly 10 in accordance with embodiments of the present invention. Fig. 13 is a drawing depicting a top view of the exemplary actuator assembly 10 of Fig. 12, and Fig. 14 is a drawing depicting a top transparent view of the exemplary actuator assembly of Figs. 12-13, i.e., transparent to show components below the top portion of the actuator assembly 10. The actuator assembly 10 may be configured as a high torque-to-weight ratio actuator having a three-stage transmission with a cable reel, roller chain, or belt final transmission stage. Alternatively, any stage may be configured using gears for speed reduction. With such a configuration, the actuator assembly 10 operates as an actuator for driving a joint component of the mobility device via a three-stage speed reduction transmission to provide adequate output torque to drive the joint components of the legged mobility device.

Referring to the figures, the actuator assembly 10 may include a motor 12, a helical gear stage 14, and a cable reel assembly stage 16. Together, such components comprise the three-stage transmission that generates the output torque to drive the joint components of the legged mobility device. The motor 12 may be a brushless DC electric motor, and may have a flat profile that is sized and shaped for incorporation into an actuator cassette referenced above. The actuator assembly 10 may be powered via a power connector 17 that is electrically connected to an external power source. In exemplary embodiments in which the actuator assembly 10 is contained in a cassette in a thigh assembly, one actuator assembly 10 may be connected to a hip assembly to provide movement at the upper leg or hip joint. In addition, also located in the cassette an oppositely oriented actuator assembly 10 may be connected to a lower leg assembly to provide movement at the knee joint.

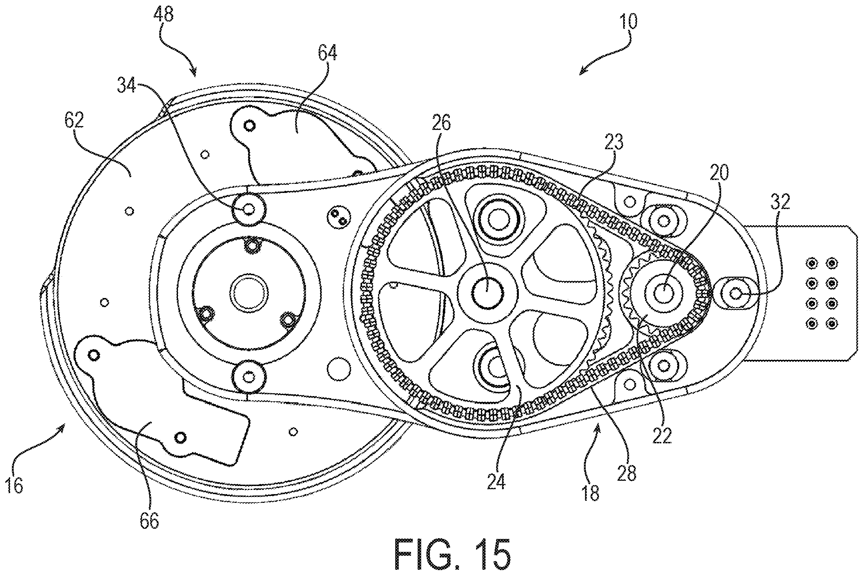

Fig. 15 is a drawing depicting a bottom view of the exemplary actuator assembly 10 of Figs. 12-14, illustrating an exemplary first stage 18 of speed reduction of the three-stage actuator assembly. Components of the first stage 18 are depicted as "ghosted" in the transparent view of Fig. 14, so as to depict where the first stage components are located relative to other components of the actuator assembly.

Referring to Figs. 14 and 15, the first stage 18 may include the motor 12 referenced above, which drives a motor output shaft 20. A first sprocket 22 may be attached to or otherwise mechanically connected to an end of the motor output shaft 20, such that the motor operates to drive rotation of the first sprocket 22. A cable element 23 may be employed to transmit power from the first small sprocket 22 to a second sprocket 24. In the example of Figs. 12-14, the cable element is configured as a cable chain to provide a first stage of speed reduction of the motor output. To achieve an appropriate speed reduction, the second sprocket 24 is larger than the first sprocket 22. The second or large sprocket 24 may be attached to or otherwise mechanically connected to a first stage output shaft 26 that provides the output of the first stage of speed reduction, such that rotation of the second or large sprocket 24 drives rotation of the first stage output shaft 26. Looking for example at the top view of Fig. 13 and the bottom view of Fig. 15, the first stage output shaft 26 extends essentially through the entirety of the actuator assembly in a width or thickness direction. The driving of the first stage output shaft 26 interconnects the first stage 18 of speed reduction to a second stage of speed reduction that is further described below.

The first stage 18 may be supported at least in part by a frame 28. The frame 28 may have suitable fastening elements 32 (see Fig. 15) for mounting the first stage on the motor side as part of the self-contained cassette configuration. Additional fastening elements 34 may be employed to mount the first stage components to an underside of the cable reel assembly 16.

Referring to Figs. 12-14 in combination with Fig. 15, the driving of the first stage output shaft 26 interconnects the first stage 18 to a second stage 38, referred to above as including the helical gear stage 14. More particularly, the second or large sprocket 24 may be mechanically connected to a central gear 40 via common connection to the first stage output shaft 26. The central gear 40 may mesh with first and second outer gears 42 and 44, each located on opposite sides of the central gear as shown in Figs. 12-14. In this manner, the central gear 40 may transmit power to the first and second outer gears 42 and 44. In the example of Figs. 12-15, the central gear and the two outer gears are configured as helical gears. In addition, the two outer helical gears are larger than the central helical gear to provide the second stage of speed reduction of the output of the first stage of speed reduction. These large helical gears 42 and 44 may be linked to a third final stage of speed reduction 48 that includes the cable reel assembly 16, such that the output of the second stage of speed reduction transmits power to the third stage of speed reduction that is further described below.

The helical gears may be rotatably mounted on a mounting plate 43, which may be fixed to the frame 28 of the first stage via fastening elements 45. Any suitable fastening elements (e.g., pins, screws, bolts) may be employed to connect the second stage to the first stage. In this manner, the frame 28 acts as a common frame for supporting the first, second, and third stages of speed reduction.

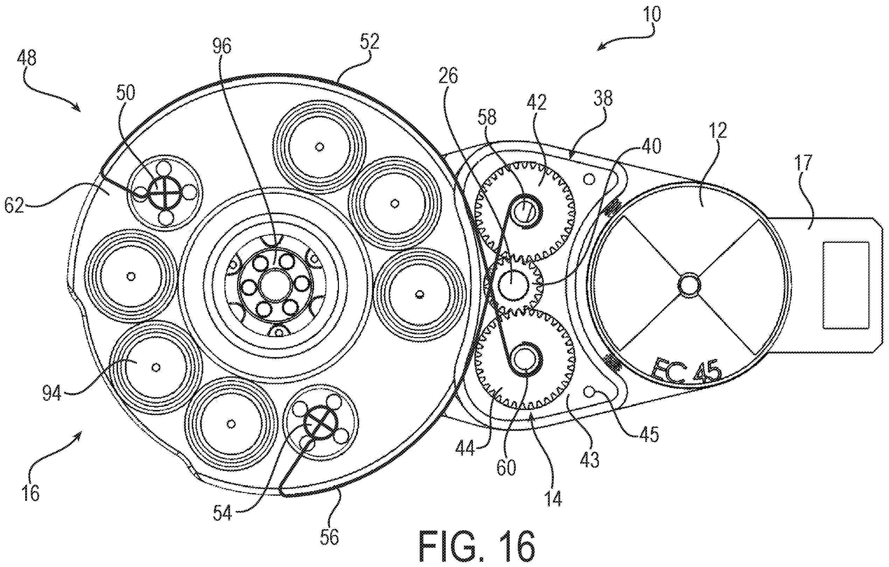

Fig. 16 is a drawing depicting a top view of the exemplary actuator assembly 10 similarly as in Fig. 13, further showing an exemplary configuration of the third stage of speed reduction 48 including the cable reel assembly 16. Generally, the cable reel assembly may include an output reel and at least one cable element that interconnects the output of the second stage of speed reduction and the output reel. The output of the second stage of speed reduction thus transmits power to the output reel via the cable element to provide the speed reduction of the output of the second stage of speed reduction.

In the example of the embodiment of Fig. 16, the third stage includes the cable reel assembly 16 having a first cable reel 50 for winding a first cable 52, and a second and separate cable reel 54 for winding a second cable 56. Each of the cable reels 50 and 54 respectively may be configured as a simple hollow mandrel designed to spool the cable 52 or 56 onto the mandrel. The cables each may be an ultra-flexible miniature steel cable as are known in the art, which are wrapped around the respective mandrels and are terminated in a center of the hollow mandrel. Also, the cable chain and roller chain instead may each be replaced with belts or a high tensile strength cord or rope type element. Suitable materials may include high modulus polymer materials, such as for example synthetic ultra-high molecular weight polyethylene braids. For generality, all such embodiments are referred to herein as the cable 52. The first cable 52 in addition winds arounds a first output rod 58 of the first outer helical gear 42 of the second stage of speed reduction, and the second cable 56 similarly in addition winds arounds a second output rod 60 of the second outer helical gear 44 of the second stage of speed reduction.

As the cable reels rotate in a first direction (as shown for example, the counterclockwise direction), the first cable reel 50 draws in the first cable 52 from the first outer helical gear 42, while the other second cable reel 54 pays out the second cable 56 to the second outer helical gear 44 to provide the third stage of speed reduction. The actuator assembly also is back-driveable. Accordingly, as the cable reels rotate in a second direction opposite from the first direction (as shown for example, the clockwise direction), the reverse occurs -- the second cable reel 54 draws in the second cable 56 from the second outer helical gear 44, while the first cable reel 50 pays out the first cable 52 to the first outer helical gear 42. The ends of the two cables are wrapped around a final large output reel 62, with one of the cables (e.g., second cable 56) wrapping clockwise and the other cable (e.g., first cable 52) wrapping counterclockwise around the output reel 62 to complete the third and final speed reduction stage 48. The third speed reduction is achieved due to the larger size of the output reel 62 relative to the cable reel path around the outer helical gear 42 and 44, as shown in Fig. 16.

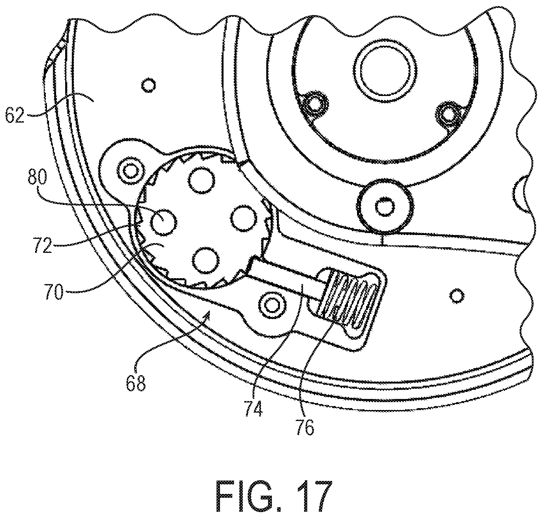

The cables each enter separate tensioner ratchet assemblies housed within the large output reel 62, which enables tightening and tensioning of the cables to remove backlash in the system. Referring to the bottom view of Fig. 15, ratchet assemblies for each cable respectively are housed under covers 64 and 66 within the output reel 62. In addition, Fig. 17 is a drawing depicting an exemplary ratchet assembly 68 in accordance with embodiments of the present invention. A comparable exemplary ratchet assembly 68 may be used respectively for tensioning each of the first cable 52 and/or the second cable 54.

The ratchet assembly 68 may include a ratchet wheel 70 having an outer diameter with teeth 72. A pawl 74 is loaded by a spring 76 against one of the teeth 72 to maintain a desired rotational state of the ratchet wheel 70. The cables referenced above may we wound around the cable reel 50/54 that is attached to the ratchet wheel 70. The ratchet wheel 70 further may include receiving elements 80. The receiving elements may be holes, indentations, or slots within the ratchet wheel that are intended to receive a cooperating end of a ratchet tool (not shown). A user may use such ratchet tool to engage the ratchet wheel 70 via the receiving elements 80. The tool then may be used to turn the ratchet wheel to tension the cable to a desired level, and the tension is maintained by the pawl 74 engaging with one of the teeth 72. In another embodiment, a tool-less ratcheting feature may be employed for tensioning instead of using a ratchet tool. A tool-less ratcheting feature may employ a flip-up crank, flip-up tab, finger holes, or the like that are provided in the ratchet assembly, and that would permit a user turn the ratchet wheel without the use of a special tool.

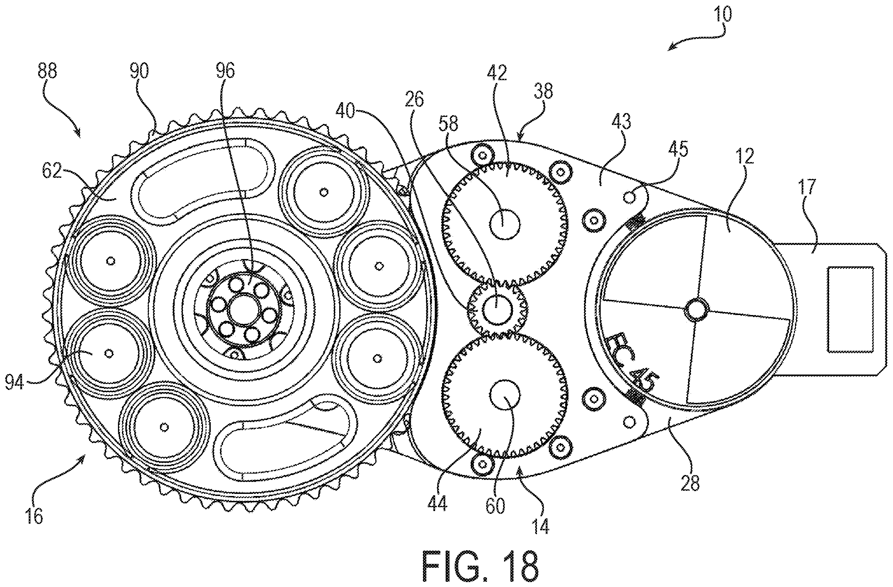

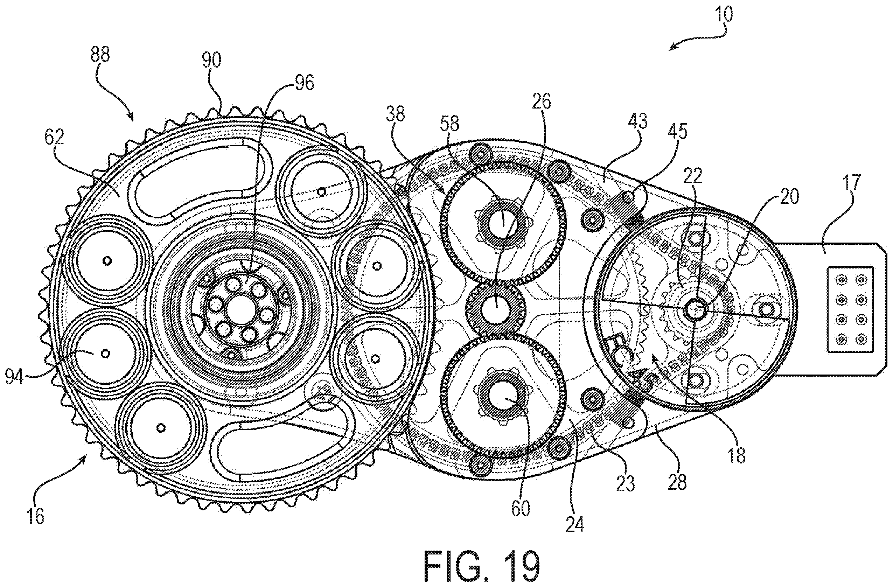

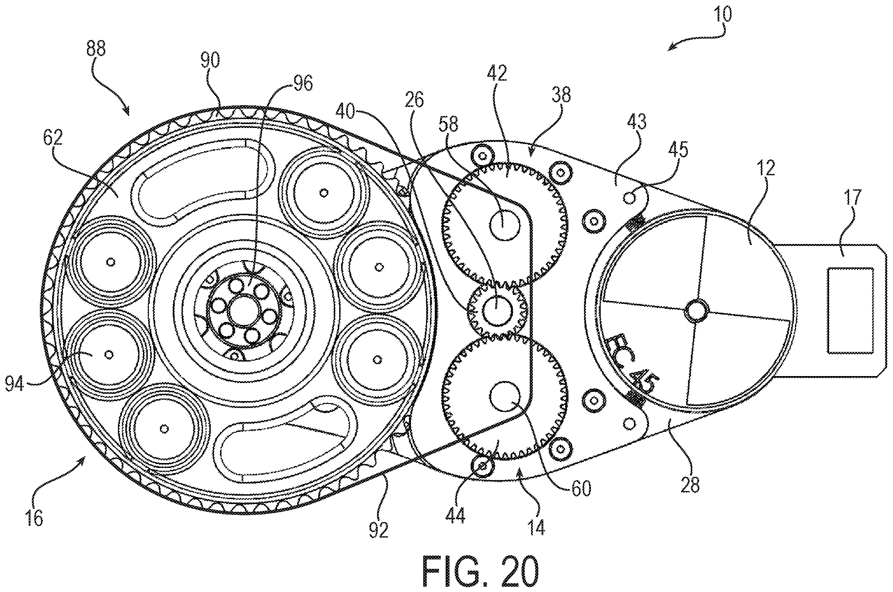

In another exemplary embodiment, the third and final stage of speed reduction uses a roller chain as the cable element instead of a cable reel drive mechanism. Also, the cable chain 23 of the first stage and the cable element of the third stage instead may each be belts, and the three helical gears of the second stage instead may be spur gears. Fig. 18 is a drawing depicting a top view of the exemplary actuator assembly 10, showing an alternative configuration of an exemplary third stage 88 of speed reduction. Fig. 19 is a drawing depicting a top transparent view of the exemplary actuator assembly 10 of Fig. 18, i.e., transparent to show components below the top portion of the actuator assembly. Fig. 20 is a drawing depicting a top view of the exemplary actuator assembly 10 of Fig. 18, showing an additional roller chain for use in the third stage of speed reduction. The first and second stages of speed reduction may be configured comparably as in the previous embodiments. Accordingly, like components are identified in Figs. 18-20 with like reference numerals as in the previous figures.

In the example of Figs. 18-20, output reel 62 may include roller teeth 90 that hold a roller chain 92 (the roller chain being shown in Fig. 20). The roller chain 92 may then wrap around the respective first and second output rods 58 and 60 of the first and second outer helical gears 42 and 44, which as referenced above may be configured as spur gears. As also referenced above, a belt may be used as the cable element 92 instead of a roller chain, with the outer diameter of the output reel 62, and the output rods 58 and 60 of the helical gears 42 and 44, all being configured for transmitting power through such a belt. A belt also may be employed instead of the cable chain 23 used in the first stage of speed reduction.

Referring to various figures, the output reel 62 further may include a plurality of pockets 94 that can provide for magnetic coupling of the actuator assembly 10 to a mating part. The output reel 62 further may include a magnetic/electrical quick connect assembly 96, which employs magnetic coupling for providing electrical connections for powering the actuator assembly. The magnetic coupling and quick connect assembly are described in detail in separate patent applications.

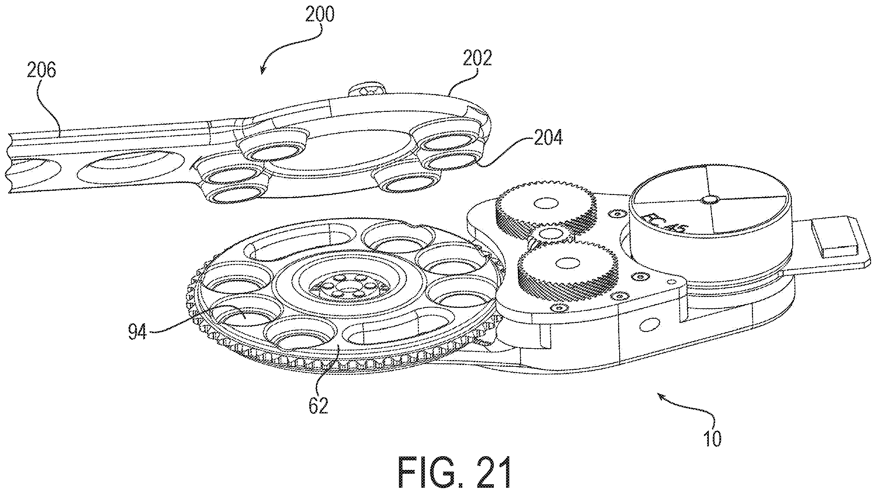

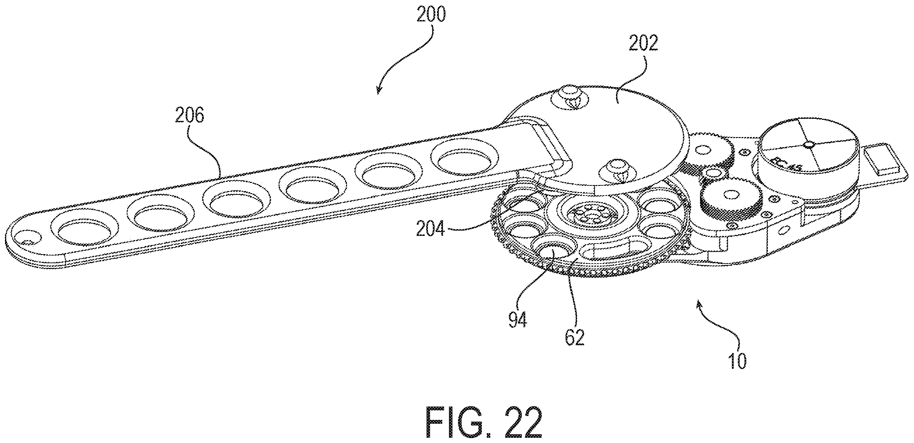

Rotation of the output reel 62 drives a driven component, such as for example an upper or lower joint component of a mobility device. Fig. 21 is a drawing depicting a first isometric view of the exemplary joint actuator assembly 10 in combination with an exemplary driven component 200, in accordance with embodiments of the present invention. Fig. 22 is a drawing depicting a second isometric view of the combined exemplary joint actuator assembly 10 and driven component 200 of Fig. 21. It will be appreciated that the joint actuator assembly 10 may be configured according to any of the embodiments.

As referenced above, the output reel 62 may include a plurality of pockets 94 that can provide for magnetic coupling of the actuator assembly 10 to a mating part, such as the driven component 200. Accordingly, the driven component 200 may include a connector portion 202 that includes a plurality of mating protrusions 204. The mating protrusions 204 each may be shaped for magnetic coupling with a respective one of the pockets 94. The connector portion 102 may be integrally attached to a body portion 206. The body portion 206 may constitute a primary component and support frame of an upper or lower joint component of a mobility device.

The joint actuator assembly configured as described has a thin profile and is extremely lightweight relative to its output torque capability. The actuator assembly, therefore, is readily incorporated into a self-contained cassette configuration. Each stage of the transmission is highly efficient and thus very little power is lost through the transmission. The transmission is also back-driveable, meaning that a torque applied at the output will cause the transmission, and ultimately the motor, to spin. This feature of being back-driveable enables cooperative motion of user muscles and device operation when the device is worn by a user who is able to contribute some power via their own muscles.

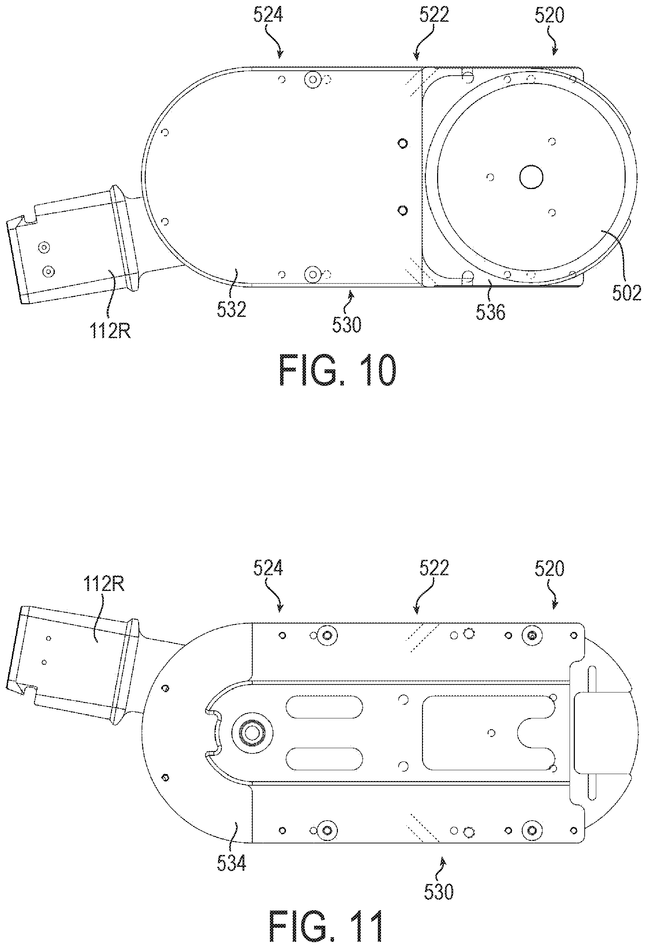

As referenced above, the joint actuator assembly may be configured with the motor, and the first, second, and third stages of speed reduction mounted on a common frame, such as the frame 28. With such common mounting, the actuator assembly components all readily may be incorporated into a common housing to form a self-contained cassette, such as the common housing 530 of the cassette structure depicted in Figs. 10-11.

In addition, the joint actuator assembly generally may be incorporated into a mobility device including a joint component and the actuator assembly, wherein the actuator assembly drives the joint component. The mobility device may be any suitable powered mobility device, such as a powered orthotic device, prosthetic device, or legged mobility device.

In exemplary embodiments, the mobility device may be a legged mobility exoskeleton device comparable as the device depicted in Figs. 1-11. Such exoskeleton device may include a hip component, at least one lower leg assembly, and at least one thigh assembly connected to the hip assembly at a hip joint and connected to the at least one lower leg assembly at a knee joint. The at least one thigh assembly may include a first actuator assembly that drives the hip joint, and a second actuator assembly that drives the knee joint. In an exemplary full exoskeleton device with left and right side components, the at least one lower leg assembly includes a left lower leg assembly and a right lower leg assembly. The at least one thigh assembly includes a left thigh assembly connected to the hip assembly at a left hip joint and to the left lower leg assembly at a left knee joint, and a right thigh assembly connected to the hip assembly at a right hip joint and to the right lower leg assembly at a right knee joint. The left thigh assembly includes a first actuator assembly that drives the left hip joint, and a second actuator assembly that drives the left knee joint. The right thigh assembly similarly includes a third actuator assembly that drives the right hip joint, and a fourth actuator assembly that drives the right knee joint.

Although the invention has been shown and described with respect to a certain embodiment or embodiments, it is obvious that equivalent alterations and modifications will occur to others skilled in the art upon the reading and understanding of this specification and the annexed drawings, in accordance with the scope of the appended claims. In addition, while a particular feature of the invention may have been described above with respect to only one or more of several illustrated embodiments, such feature may be combined with one or more other features of the other embodiments, in accordance with the scope of the appended claims.

## Claims

1. A joint actuator assembly (10) comprising:
a motor (12) that drives a joint connector for driving a joint of a mobility device;
a first stage (18) of speed reduction connected to an output shaft (20) of the motor (12) for providing a speed reduction of the motor output;
a second stage (38) of speed reduction linked to an output of the first stage (18) of speed reduction for providing a speed reduction relative to the output of the first stage; and
a third stage (48, 88) of speed reduction linked to an output of the second stage (38) of speed reduction for providing a speed reduction relative to the output of the second stage (38);
wherein the first (18), second (38), and third stages (48, 88) operate as a three-stage transmission to provide the output that drives the joint connector;
wherein the third stage (48, 88) of speed reduction comprises a cable reel assembly (16) including an output reel (62) and at least one cable element (52, 56) that interconnects the output of the second stage (38) of speed reduction and the output reel (62); and
wherein the output of the second stage (38) of speed reduction transmits power to the output reel (62) via the cable element (52, 56) to provide the speed reduction of the output of the second stage (38) of speed reduction;
**characterised in that** the cable reel assembly comprises:
a first cable reel (50) for winding a first cable (52), and the first cable (52) further winds around a first output rod (58) of the second stage (38) of speed reduction; and
a second cable reel (54) for winding a second cable (56), and the second cable (56) further winds around a second output rod (60) of the second stage (38) of speed reduction;
wherein when the cable reels (50, 54) rotate in a first direction, the first cable reel (50) draws in the first cable (52) and the second cable reel (54) pays out the second cable (56) to provide the third stage of speed reduction.

2. The joint actuator assembly of claim 1, wherein the first stage (18) of speed reduction comprises:
a first sprocket (22) that is mechanically connected to the output shaft (20) of the motor (12), such that the motor (12) operates to drive rotation of the first sprocket (22);
a second sprocket (24) that is larger than the first sprocket (22); and
a cable element (23) that transmits power from the first sprocket (22) to the second sprocket (24) to provide the speed reduction of the motor output.

3. The joint actuator assembly of claim 2, wherein the cable element (23) is a cable chain, or
wherein the cable element (23) is a belt.

4. The joint actuator assembly of any of claims 1-3, wherein the output of the first stage (18) of speed reduction comprises a first stage output shaft (26) that interconnects the first stage (18) of speed reduction to the second stage (38) of speed reduction.

5. The joint actuator assembly of any of claims 1-4, wherein the second stage (38) of speed reduction comprises:
a central gear (40) that is mechanically connected to the output of the first stage (18) of speed reduction; and
first and second outer gears (42, 44) that mesh with the central gear (40), wherein the first and second outer gears (42, 44) are larger than the central gear (40) and are located on opposite sides of the central gear (40);
wherein the central gear (40) transmits power to the first and second outer gears (42, 44) to provide the speed reduction of the output of the first stage (18) of speed reduction.

6. The joint actuator assembly of claim 5, wherein the central gear (40) and the first and second outer gears (42, 44) are helical gears, or
wherein the central gear (40) and the first and second outer gears (42, 44) are spur gears.

7. The joint actuator assembly of any preceding claim, wherein the actuator assembly (10) is back-driveable such that when the cable reels (50, 54) rotate in a second direction opposite from the first direction, the second cable reel (54) draws in the second cable (56) and the first cable reel (50) pays out the first cable (52).

8. The joint actuator assembly of any preceding claim, wherein one of the first or second cables (52, 56) wraps around the output reel (62) in a clockwise direction and the other of the first or second cables (52, 56) wraps around the output reel (62) in a counterclockwise direction.

9. The joint actuator assembly of any preceding claim, wherein the cable reel assembly (16) further comprises one or more ratchet assemblies (68) for tensioning the first cable (52) and/or the second cable (56).

10. The joint actuator assembly of any preceding claim, wherein the cable element (52, 56) of the cable assembly (16) is a roller chain, or
wherein the cable element (52, 56) of the cable assembly (16) is one of a belt, cord or rope made of a polymer material.

11. The joint actuator assembly of preceding claim, wherein the motor (12) is a brushless electric motor having a flat profile.

12. The joint actuator assembly of any preceding claim, wherein the motor (12), and the first (18), second (38), and third (48, 88) stages of speed reduction are mounted on a common frame (28), and wherein the motor (12), and the first (18), second (38), and third (48, 88) stages of speed reduction are incorporated into a common housing (530) to form a self-contained cassette (500).

13. A mobility device (100) comprising:
a joint component; and
the joint actuator assembly (10) of any of claims 1-12, wherein the actuator assembly (10) drives the joint component.

14. A legged mobility exoskeleton device (100) comprising:
a hip component (110);
at least one lower leg assembly (106R, 106L); and
at least one thigh assembly (108R, 108L) connected to the hip assembly (110) at a hip joint (102R, 102L) and connected to the at least one lower leg assembly (106R, 106L) at a knee joint (104R, 104L);
wherein the at least one thigh assembly (108R, 108L) includes a first joint actuator assembly (10) according to any of claims 1-12 that drives the hip joint (102R, 102L), and a second joint actuator assembly (10) according to any of claims 1-12 that drives the knee joint (104R, 104L).

15. The legged mobility exoskeleton device (100) of claim 14, wherein:
the at least one lower leg assembly comprises a left lower leg assembly (106L) and a right lower leg assembly (106R); and
the at least one thigh assembly comprises a left thigh assembly (108L) connected to the hip assembly (110) at a left hip joint (102L) and to the left lower leg assembly (106L) at a left knee joint (104L), and a right thigh assembly (108R) connected to the hip assembly (110) at a right hip joint (102R) and to the right lower leg assembly (106R) at a right knee joint (104R);
wherein the left thigh assembly (108L) includes the first joint actuator assembly (10) according to any of claims 1-12 that drives the left hip joint (102L), and the second joint actuator assembly (10) according to any of claims 1-12 that drives the left knee joint (104L); and
wherein the right thigh assembly (108R) includes a third joint actuator assembly (10) according to any of claims 1-12 that drives the right hip joint (102R), and a fourth joint actuator assembly (10) according to any of claims 1-12 that drives the right knee joint (104R).

## Patentansprüche

1. Gelenkaktuatoranordnung (10), umfassend:
einen Motor (12), der einen Gelenkverbinder zum Antreiben eines Gelenks eines Mobilitätsgeräts antreibt;
eine erste Geschwindigkeitsverminderungsstufe (18), die mit einer Abtriebswelle (20) des Motors (12) zum Vorsehen einer Geschwindigkeitsverminderung des Motorausgangs verbunden ist;
eine zweite Geschwindigkeitsverminderungsstufe (38), die mit einem Ausgang der ersten Geschwindigkeitsverminderungsstufe (18) zum Vorsehen einer Geschwindigkeitsverminderung bezüglich des Ausgangs der ersten Geschwindigkeitsverminderungstufe verbunden ist; und
eine dritte Geschwindigkeitsverminderungsstufe (48, 88), die mit einem Ausgang der zweiten Geschwindigkeitsverminderungsstufe (38) zum Vorsehen einer Geschwindigkeitsverminderung bezüglich des Ausgangs der zweiten Geschwindigkeitsverminderungsstufe (38) verbunden ist;
wobei die erste (18), zweite (38) und dritte Geschwindigkeitsverminderungsstufe (48, 88) als ein Dreistufengetriebe zum Vorsehen des Ausgangs arbeiten, die den Gelenkverbinder antreibt;
wobei die dritte Geschwindigkeitsverminderungsstufe (48, 88) eine Kabelspulenanordnung (16) umfasst, die eine Ausgangsspule (62) und mindestens ein Kabelelement (52, 56) enthält, welches den Ausgang der zweiten Geschwindigkeitsverminderungsstufe (38) und die Ausgangsspule (62) miteinander verbindet; und
wobei der Ausgang der zweiten Geschwindigkeitsverminderungsstufe (38) Kraft auf die Ausgangsspule (62) über das Kabelelement (52, 56) zum Vorsehen der Geschwindigkeitsverminderung des Ausgangs der zweiten Geschwindigkeitsverminderungsstufe (38) überträgt;
**dadurch gekennzeichnet, dass** die Kabelspulenanordnung umfasst:
eine erste Kabelspule (50) zum Aufwickeln eines ersten Kabels (52), und wobei sich das erste Kabel (52) ferner um eine erste Abtriebsstange (58) der zweiten Geschwindigkeitsverminderungsstufe (38) wickelt; und
eine zweite Kabelspule (54) zum Aufwickeln eines zweiten Kabels (56), und wobei sich das zweite Kabel (56) ferner um eine zweite Abtriebsstange (60) der zweiten Geschwindigkeitsverminderungsstufe (38) wickelt;
wobei, wenn die Kabelspulen (50, 54) in einer ersten Richtung drehen, die erste Kabelspule (50) das erste Kabel (52) einzieht und die zweite Kabelspule (54) das zweite Kabel (56) ausgibt, um die dritte Stufe zur Geschwindigkeitsverminderung vorzusehen.

2. Gelenkaktuatoranordnung nach Anspruch 1, wobei die erste Geschwindigkeitsverminderungsstufe (18) umfasst:
ein erstes Ritzel (22), das mechanisch mit der Abtriebswelle (20) des Motors (12) verbunden ist, sodass der Motor zum Drehantrieb des ersten Ritzels (22) arbeitet;
ein zweites Ritzel (24), das größer als das erste Ritzel (22) ist; und
ein Kabelelement (23), das Kraft vom ersten Ritzel (22) auf das zweite Ritzel (24) überträgt, um die Geschwindigkeitsverminderung des Motorausgangs vorzusehen.

3. Gelenkaktuatoranordnung nach Anspruch 2, wobei das Kabelelement (23) eine Kabelkette ist, oder
wobei das Kabelelement (23) ein Riemen ist.

4. Gelenkaktuatoranordnung nach einem der Ansprüche 1 bis 3, wobei der Ausgang der ersten Geschwindigkeitsverminderungsstufe (18) eine erste Stufenabtriebswelle (26) umfasst, die die erste Geschwindigkeitsverminderungsstufe (18) mit der zweiten Geschwindigkeitsverminderungsstufe (38) verbindet.

5. Gelenkaktuatoranordnung nach einem der Ansprüche 1 bis 4, wobei die zweite Geschwindigkeitsverminderungsstufe (38) umfasst:
ein mittiges Zahnrad (40), das mechanisch mit dem Ausgang der ersten Geschwindigkeitsverminderungsstufe (18) verbunden ist; und
ein erstes und zweites äußeres Zahnrad (42, 44), die mit dem mittigen Zahnrad (40) in Eingriff stehen, wobei das erste und zweite äußere Zahnrad (42, 44) größer als das mittige Zahnrad (40) sind und auf gegenüberliegenden Seiten des mittigen Zahnrads (40) angeordnet sind;
wobei das mittige Zahnrad (40) Kraft auf das erste und zweite äußere Zahnrad (42, 44) überträgt, um die Geschwindigkeitsverminderung des Ausgangs der ersten Geschwindigkeitsverminderungsstufe (18) vorzusehen.

6. Gelenkaktuatoranordnung nach Anspruch 5, wobei das mittige Zahnrad (40) und das erste und zweite äußere Zahnrad (42, 44) Schrägzahnräder sind, oder
wobei das mittige Zahnrad (40) und das erste und zweite äußere Zahnrad (42, 44) Geradstirnräder sind.

7. Gelenkaktuatoranordnung nach einem der vorhergehenden Ansprüche, wobei die Aktuatoranordnung (10) rückwärts antreibbar ist, sodass, wenn die Kabelspule (50, 54) in einer zweiten, der ersten Richtung entgegengesetzten Richtung drehen, die zweite Kabelspule (54) das zweite Kabel (56) einzieht und die erste Kabelspule (50) das erste Kabel (52) ausgibt.

8. Gelenkaktuatoranordnung nach einem der vorhergehenden Ansprüche, wobei sich eines des ersten oder zweiten Kabels (52, 56) im Uhrzeigersinn um die Ausgangsspule (62) wickelt und sich das andere des ersten oder zweiten Kabels (52, 56) gegen den Uhrzeigersinn um die Ausgangsspule (62) wickelt.

9. Gelenkaktuatoranordnung nach einem der vorhergehenden Ansprüche, wobei die Kabelspulenanordnung (16) ferner eine oder mehr Klinkenradanordnungen (68) zum Spannen des ersten Kabels (52) und/oder des zweiten Kabels (56) umfasst.

10. Gelenkaktuatoranordnung nach einem der vorhergehenden Ansprüche, wobei das Kabelelement (52, 56) der Kabelanordnung (16) eine Rollenkette ist, oder
wobei das Kabelelement (52, 56) der Kabelanordnung (16) eines eines Riemens, einer Leine oder eines Seils aus einem Polymermaterial ist.

11. Gelenkaktuatoranordnung nach einem der vorhergehenden Ansprüche, wobei der Motor (12) ein bürstenloser Elektromotor mit einem flachen Profil ist.

12. Gelenkaktuatoranordnung nach einem der vorhergehenden Ansprüche, wobei der Motor (12) und die erste (18), zweite (38) und dritte (48, 88) Geschwindigkeitsverminderungsstufe an einem gemeinsamen Rahmen (28) angebracht sind, und wobei der Motor (12) und die erste (18), zweite (38) und dritte (48, 88) Geschwindigkeitsverminderungsstufe in einem gemeinsamen Gehäuse (530) eingegliedert sind, um eine in sich geschlossene Kassette (500) auszubilden.

13. Mobilitätsgerät (100), umfassend:
eine Gelenkkomponente; und
die Gelenkaktuatoranordnung (10) nach einem der Ansprüche 1 bis 12, wobei die Aktuatoranordnung (10) die Gelenkkomponente antreibt.

14. Mobilitätsexoskelettgerät (100) für Beine, umfassend:
eine Hüftkomponente (110);
zumindest eine Unterschenkelanordnung (106R, 106L); und
zumindest eine Oberschenkelanordnung (108R, 108L), die mit der Hüftanordnung (110) an einem Hüftgelenk (102R, 102L) verbunden ist und mit der zumindest einen Unterschenkelanordnung (106R, 106L) an einem Kniegelenk (104R, 104L) verbunden ist;
wobei die zumindest eine Oberschenkelanordnung (108R, 108L) eine erste Gelenkaktuatoranordnung (10) nach einem der Ansprüche 1 bis 12, die das Hüftgelenk (102R, 102L) antreibt, und eine zweite Gelenkaktuatoranordnung (10) nach einem der Ansprüche 1 bis 12 enthält, die das Kniegelenk (104R, 104L) antreibt.

15. Mobilitätsexoskelettgerät (100) für Beine nach Anspruch 14, wobei:
die zumindest eine Unterschenkelanordnung eine linke Unterschenkelanordnung (106L) und eine rechte Unterschenkelanordnung (106R) umfasst; und
die zumindest eine Oberschenkelanordnung eine linke Oberschenkelanordnung (108L), die mit der Hüftanordnung (110) an einem linken Hüftgelenk (102L) und mit der linken Unterschenkelanordnung (106L) an einem linken Kniegelenk (104L) verbunden ist, und eine rechte Oberschenkelanordnung (108R) umfasst, die mit der Hüftanordnung (110) an einem rechten Hüftgelenk (102R) und mit der rechten Unterschenkelanordnung (106R) an einem rechten Kniegelenk (104R) verbunden ist;
wobei die linke Oberschenkelanordnung (108L) die erste Gelenkaktuatoranordnung (10) nach einem der Ansprüche 1 bis 12, die das linke Hüftgelenk (102L) antreibt, und die zweite Gelenkaktuatoranordnung (10) nach einem der Ansprüche 1 bis 12 enthält, die das linke Kniegelenk (104L) antreibt; und
wobei die rechte Oberschenkelanordnung (108R) eine dritte Gelenkaktuatoranordnung (10) nach einem der Ansprüche 1 bis 12, die das rechte Hüftgelenk (102R) antreibt, und eine vierte Gelenkaktuatoranordnung (10) nach einem der Ansprüche 1 bis 12 enthält, die das rechte Kniegelenk (104R) antreibt.

## Revendications

1. Ensemble actionneur d'articulation (10) comprenant :
un moteur (12) qui entraîne un connecteur d'articulation pour entraîner une articulation d'un appareil de mobilité ;
un premier étage (18) de réduction de vitesse relié à un arbre de sortie (20) du moteur (12) pour fournir une réduction de vitesse de la sortie de moteur ;
un deuxième étage (38) de réduction de vitesse lié à une sortie du premier étage (18) de réduction de vitesse pour fournir une réduction de vitesse par rapport à la sortie du premier étage ; et
un troisième étage (48, 88) de réduction de vitesse lié à une sortie du deuxième étage (38) de réduction de vitesse pour fournir une réduction de vitesse par rapport à la sortie du deuxième étage (38) ;
dans lequel les premier (18), deuxième (38) et troisième étages (48, 88) fonctionnent en tant que transmission à trois étages pour fournir la sortie qui entraîne le connecteur d'articulation ;
dans lequel le troisième étage (48, 88) de réduction de vitesse comprend un ensemble enrouleur de câble (16) comportant un enrouleur de sortie (62) et au moins un élément de câble (52, 56) qui relie entre eux la sortie du deuxième étage (38) de réduction de vitesse et l'enrouleur de sortie (62) ; et
dans lequel la sortie du deuxième étage (38) de réduction de vitesse transmet une puissance à l'enrouleur de sortie (62) via l'élément de câble (52, 56) pour fournir la réduction de vitesse de la sortie du deuxième étage (38) de réduction de vitesse ;
**caractérisé en ce que** l'ensemble enrouleur de câble comprend :
un premier enrouleur de câble (50) pour enrouler un premier câble (52), et le premier câble (52) s'enroule en outre autour d'une première tige de sortie (58) du deuxième étage (38) de réduction de vitesse ; et
un deuxième enrouleur de câble (54) pour enrouler un deuxième câble (56), et le deuxième câble (56) s'enroule en outre autour d'une deuxième tige de sortie (60) du deuxième étage (38) de réduction de vitesse ;
dans lequel lorsque les enrouleurs de câble (50, 54) tournent dans une première direction, le premier enrouleur de câble (50) tire le premier câble (52) et le deuxième enrouleur de câble (54) déroule le deuxième câble (56) pour fournir le troisième étage de réduction de vitesse.

2. Ensemble actionneur d'articulation de la revendication 1, dans lequel le premier étage (18) de réduction de vitesse comprend :
un premier pignon (22) qui est relié mécaniquement à l'arbre de sortie (20) du moteur (12), de sorte que le moteur (12) fonctionne pour entraîner la rotation du premier pignon (22) ;
un deuxième pignon (24) qui est plus grand que le premier pignon (22) ; et
un élément de câble (23) qui transmet une puissance du premier pignon (22) au deuxième pignon (24) pour fournir la réduction de vitesse de la sortie de moteur.

3. Ensemble actionneur d'articulation de la revendication 2, dans lequel l'élément de câble (23) est une chaîne-câble, ou
dans lequel l'élément de câble (23) est une courroie.

4. Ensemble actionneur d'articulation de l'une des revendications 1 à 3, dans lequel la sortie du premier étage (18) de réduction de vitesse comprend un arbre de sortie de premier étage (26) qui relie entre eux le premier étage (18) de réduction de vitesse et le deuxième étage (38) de réduction de vitesse.

5. Ensemble actionneur d'articulation de l'une des revendications 1 à 4, dans lequel le deuxième étage (38) de réduction de vitesse comprend :
un engrenage central (40) qui est relié mécaniquement à la sortie du premier étage (18) de réduction de vitesse ; et
des premier et deuxième engrenages extérieurs (42, 44) qui s'engrènent avec l'engrenage central (40), où les premier et deuxième engrenages extérieurs (42, 44) sont plus grands que l'engrenage central (40) et sont situés sur des côtés opposés de l'engrenage central (40) ;
dans lequel l'engrenage central (40) transmet une puissance aux premier et deuxième engrenages extérieurs (42, 44) pour fournir la réduction de vitesse de la sortie du premier étage (18) de réduction de vitesse.

6. Ensemble actionneur d'articulation de la revendication 5, dans lequel l'engrenage central (40) et les premier et deuxième engrenages extérieurs (42, 44) sont des engrenages hélicoïdaux, ou
dans lequel l'engrenage central (40) et les premier et deuxième engrenages extérieurs (42, 44) sont des engrenages cylindriques.

7. Ensemble actionneur d'articulation de l'une des revendications précédentes, dans lequel l'ensemble actionneur (10) peut être entraîné en arrière de sorte que lorsque les enrouleurs de câble (50, 54) tournent dans une deuxième direction opposée à la première direction, le deuxième enrouleur de câble (54) tire le deuxième câble (56) et le premier enrouleur de câble (50) déroule le premier câble (52).

8. Ensemble actionneur d'articulation de l'une des revendications précédentes, dans lequel l'un des premier et deuxième câbles (52, 56) s'enroule autour de l'enrouleur de sortie (62) dans le sens des aiguilles d'une montre et l'autre des premier et deuxième câbles (52, 56) s'enroule autour de l'enrouleur de sortie (62) dans le sens contraire des aiguilles d'une montre.

9. Ensemble actionneur d'articulation de l'une des revendications précédentes, dans lequel l'ensemble enrouleur de câble (16) comprend en outre un ou plusieurs ensembles à cliquet (68) pour tendre le premier câble (52) et/ou le deuxième câble (56).

10. Ensemble actionneur d'articulation de l'une des revendications précédentes, dans lequel l'élément de câble (52, 56) de l'ensemble de câble (16) est une chaîne à rouleaux, ou
dans lequel l'élément de câble (52, 56) de l'ensemble de câble (16) est l'un(e) d'une courroie, d'un cordon et d'une corde en matériau polymère.

11. Ensemble actionneur d'articulation de la revendication précédente, dans lequel le moteur (12) est un moteur électrique sans balai ayant un profil plat.

12. Ensemble actionneur d'articulation de l'une des revendications précédentes, dans lequel le moteur (12) et les premier (18), deuxième (38) et troisième (48, 88) étages de réduction de vitesse sont montés sur un châssis commun (28) et dans lequel le moteur (12) et les premier (18), deuxième (38) et troisième (48, 88) étages de réduction de vitesse sont incorporés dans un boîtier commun (530) pour former une cassette autonome (500).

13. Dispositif de mobilité (100) comprenant :
un composant d'articulation ; et
l'ensemble actionneur d'articulation (10) de l'une des revendications 1 à 12, dans lequel l'ensemble actionneur (10) entraîne le composant d'articulation.

14. Dispositif d'exosquelette de mobilité à jambes (100) comprenant :
un composant de hanche (110) ;
au moins un ensemble partie inférieure de jambe (106R, 106L) ; et
au moins un ensemble cuisse (108R, 108L) relié à l'ensemble hanche (110) au niveau d'une articulation de hanche (102R, 102L) et relié à l'au moins un ensemble partie inférieure de jambe (106R, 106L) au niveau d'une articulation de genou (104R, 104L) ;
dans lequel l'au moins un ensemble cuisse (108R, 108L) comporte un premier ensemble actionneur d'articulation (10) selon l'une des revendications 1 à 12 qui entraîne l'articulation de hanche (102R, 102L), et un deuxième ensemble actionneur d'articulation (10) selon à l'une des revendications 1 à 12 qui entraîne l'articulation de genou (104R, 104L).

15. Dispositif d'exosquelette de mobilité à jambes (100) de la revendication 14, dans lequel :
l'au moins un ensemble partie inférieure de jambe comprend un ensemble partie inférieure de la jambe gauche (106L) et un ensemble partie inférieure de la jambe droite (106R) ; et
l'au moins un ensemble cuisse comprend un ensemble cuisse gauche (108L) relié à l'ensemble hanche (110) au niveau d'une articulation de la hanche gauche (102L) et à l'ensemble partie inférieure de la jambe gauche (106L) au niveau d'une articulation du genou gauche (104L), et un ensemble cuisse droite (108R) relié à l'ensemble hanche (110) au niveau d'une articulation de la hanche droite (102R) et à l'ensemble partie inférieure de la jambe droite (106R) au niveau d'une articulation du genou droit (104R) ;
dans lequel l'ensemble cuisse gauche (108L) comporte le premier ensemble actionneur d'articulation (10) selon l'une des revendications 1 à 12 qui entraîne l'articulation de la hanche gauche (102L), et le deuxième ensemble actionneur d'articulation (10) selon l'une des revendications 1 à 12 qui entraîne l'articulation du genou gauche (104L) ; et
dans lequel l'ensemble cuisse droite (108R) comporte un troisième ensemble actionneur d'articulation (10) selon l'une des revendications 1 à 12 qui entraîne l'articulation de la hanche droite (102R), et un quatrième ensemble actionneur d'articulation (10) selon l'une des revendications 1 à 12 qui entraîne l'articulation du genou droit (104R).
